# EUROPEAN PATENT APPLICATION

(11) **EP 4 723 036 A1**
(43) Date of publication of application: **08.04.2026**
(21) Application number: 24813097.3
(22) Date of filing: 22.04.2024
(51) Int. Cl.: G06T 7/187, G06T 7/00

(54) **IMAGE PROCESSING DEVICE, IMAGE PROCESSING METHOD, AND IMAGE PROCESSING SYSTEM**

(30) Priority: 31.05.2023 JP 2023090096
(71) Applicant: HITACHI HIGH-TECH CORPORATION, Tokyo 105-6409 (JP)
(72) Inventor: FUJII Shuhei, Tokyo 100-8280 (JP); HATTORI Hideharu, Tokyo 100-8280 (JP)
(74) Representative: Strehl & Partner mbB
(86) International application number: PCT/JP2024/015752
(87) International publication number: WO 2024/247546

(57) **Abstract**

An image processing device includes an input unit to receive an input image, a feature amount extraction unit to extract a feature amount from the input image, an object region detection unit to detect an object region in the image through use of the feature amount, an object end-point estimation unit to estimate coordinates of an end point of an object in the object region, an object bridging unit to calculate a trajectory complementing a space between end points in two object regions on the input image, a same-object determination unit to determine, from luminance value transition on the trajectory, whether the two object regions are included in the same object, an object region correction unit to correct the object region output by the object region detection unit based on a determination result output by the same-object determination unit, and an output unit to output the corrected object region.

## Description

### Claim of Priority

This application claims priority to Japanese Patent Application No. 2023-090096 filed on May 31, 2023, the content of which is incorporated herein by reference.

### Technical Field

This invention relates to an image processing technology of detecting a specific object in an image.

### Background Art

In recent years, in analysis of an image picked up by a camera or the like, a specific object is frequently detected. In the detection of an object, in order to prevent a detection accuracy from being reduced due to blocking of the object by an obstacle, for example, a technology as described in JP 2021-056899 A is known. In this publication, there is a description that "A corrected image is generated based on a position of a moving object region detected from an image and a predetermined region in the image. The corrected image is obtained by correcting a color of at least a part of the predetermined region based on a color of the moving object region."

### Summary of Invention

### Technical Problem

In JP 2021-056899 A, among small regions obtained by dividing the predetermined region set as having a possibility of occurrence of occlusion, only a part adjacent to a detection target object is corrected. However, when the occlusion occurs in a wide range, an occlusion small region that is not adjacent to the target object may be present. Moreover, when the object is divided by occlusion, the division of the object cannot be solved even in the corrected image, and such a situation that the object is detected as a plurality of separated pieces is expected to occur.

In view of the above, this invention has an object to provide a technology of suppressing such a problem that an object divided by occlusion is detected as a plurality of separated pieces.

### Solution to Problem

In order to solve the above-mentioned problem, a typical one of an image processing device, method, and system of this invention is one that analyzes, for two detected object regions, transition of a luminance value between both the regions, integrates both object regions when it is determined that both objects are a single object divided by an obstacle, and corrects a detection result of the object.

According to another aspect of this invention, there is provided an image processing device for detecting a specific object in an image, the image processing device including: an input unit configured to receive an input image; a feature amount extraction unit configured to extract a feature amount from the input image; an object region detection unit configured to detect an object region in the image through use of the feature amount; an object end-point estimation unit configured to estimate coordinates of an end point of an object in the object region; an object bridging unit configured to calculate a trajectory which complements a space between end points in two object regions on the input image; a same-object determination unit configured to determine, from luminance value transition on the trajectory, whether the two object regions are included in the same object; an object region correction unit configured to correct the object region output by the object region detection unit based on a determination result output by the same-object determination unit; and an output unit configured to output the corrected object region.

According to still another aspect of this invention, there is provided an image processing method of detecting, by a device, a specific object in an image, the image processing method including: detecting, by the device, an object region from an input image; extracting, by the device, luminance value transition between two detected object regions; determining, by the device, whether the two object regions are included in the same object from the luminance value transition; and correcting, by the device, the object region in accordance with a result of the determining.

### Advantageous Effects of Invention

According to one aspect of this invention, it is possible to provide the device, the method, and the system with which it is possible to detect even an object that is divided by occlusion caused by an obstacle on the image as a single object instead of a plurality of separated pieces.

### Brief Description of Drawings

[FIG. 1] FIG. 1 is a diagram for illustrating an example of a hardware configuration of an image processing device according to a first embodiment of this invention.
[FIG. 2] FIG. 2 is a block diagram for illustrating an example of a functional configuration of the image processing device according to the first embodiment.
[FIG. 3] FIG. 3 is an explanatory flow chart for illustrating an example of a processing flow of an image processing method according to the first embodiment.
[FIG. 4A] FIG. 4A is an explanatory view for illustrating processing of bridging a space between object regions in the first embodiment.
[FIG. 4B] FIG. 4B is an explanatory view for illustrating the processing of bridging the space between the object regions in the first embodiment.
[FIG. 4C] FIG. 4C is an explanatory view for illustrating the processing of bridging the space between the object regions in the first embodiment.
[FIG. 4D] FIG. 4D is an explanatory view for illustrating the processing of bridging the space between the object regions in the first embodiment.
[FIG. 5] FIG. 5 is an explanatory diagram for illustrating processing of extracting a luminance value between the object regions in the first embodiment.
[FIG. 6] FIG. 6 is a block diagram for illustrating an example of a functional configuration of an image processing device according to a second embodiment of this invention.
[FIG. 7] FIG. 7 is an explanatory flow chart for illustrating an example of a processing flow of an image processing method according to the second embodiment.
[FIG. 8A] FIG. 8A is an explanatory view for illustrating processing of selecting a combination of object regions in the second embodiment.
[FIG. 8B] FIG. 8B is an explanatory view for illustrating the processing of selecting the combination of object regions in the second embodiment.
[FIG. 8C] FIG. 8C is an explanatory view for illustrating the processing of selecting the combination of object regions in the second embodiment.
[FIG. 8D] FIG. 8D is an explanatory view for illustrating the processing of selecting the combination of object regions in the second embodiment.
[FIG. 9] FIG. 9 is a block diagram for illustrating an example of a functional configuration of an image processing device according to a third embodiment of this invention.
[FIG. 10] FIG. 10 is an explanatory flow chart for illustrating an example of a processing flow of an image processing method according to the third embodiment.
[FIG. 11] FIG. 11 is a diagram for illustrating an example of a hardware configuration of an image processing system according to a fourth embodiment of this invention.

### Description of Embodiments

Embodiments of this invention are described with reference to the attached drawings. One embodiment of this specification is to analyze, for two detected object regions, transition of a luminance value between both the regions, integrate both object regions when it is determined that both objects are a single object divided by an obstacle, and correct a detection result of the object. In this manner, it is possible to detect even an object that is divided by occlusion caused by an obstacle on the image as a single object.

### First Embodiment

A first embodiment of this invention provides an image processing device and a method therefor in which a region of a specific object is detected from an image, and, with further reference to luminance value transition between regions, when occlusion caused by an obstacle divides a target object, the division is determined and the detected object region is corrected.

More specifically, when a region of a target object is detected as a plurality of separated pieces by occlusion of an obstacle on an image, a line connecting the divided object regions is calculated, and presence or absence of division by occlusion is determined from luminance value transition on the line. In this manner, the object regions derived from the same object can be integrated, and over-detection in the detection of the object can be suppressed. Various types of target objects can be detected, including, for example, rod-shaped bacillus, nanorods (nanometer-scale, rod-shaped metal or semiconductor materials), human bodies, and the like.

### <Hardware Configuration of Image Processing Device>

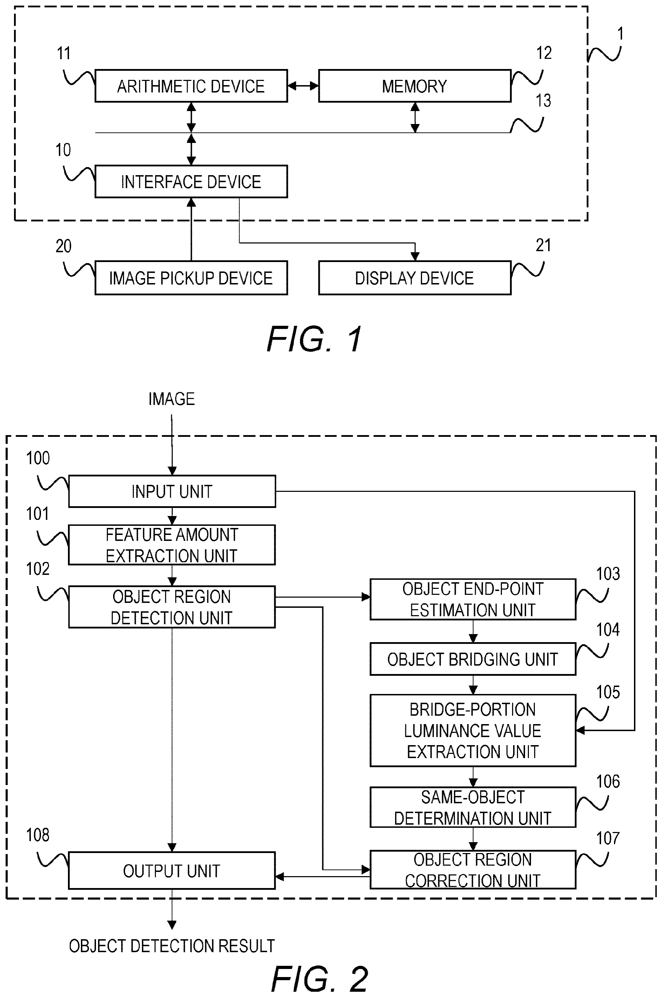

FIG. 1 is a diagram for illustrating an example of a hardware configuration of an image processing device according to the first embodiment. An image processing device 1 includes an interface device 10, an arithmetic device 11, a memory 12, and a bus 13. The interface device 10, the arithmetic device 11, and the memory 12 transmit and receive information via the bus 13.

Each component of the image processing device 1 is described. The interface device 10 is a communication device that transmits and receives a signal to and from a device outside of the image processing device 1. Examples of the device that performs communication to and from the interface device 10 include an image pickup device 20 such as a camera or a microscope, and a display device 21 such as a monitor or a printer.

The arithmetic device 11 is a device that executes various types of processing in the image processing device 1, and is, for example, a central processing unit (CPU), a graphics processing unit (GPU), or the like. Functions to be executed by the arithmetic device 11 are described later with reference to FIG. 2.

The memory 12 is a device that stores a program to be executed by the arithmetic device 11, a network and a weight thereof to be used in the processing, processing results, and the like, and is, for example, a hard disk drive (HDD), a solid state drive (SSD), or the like.

### <Functional Configuration of Image Processing Device>

FIG. 2 is a block diagram for illustrating an example of a functional configuration of the image processing device according to the first embodiment.

The image processing device 1 includes an input unit 100, a feature amount extraction unit 101, an object region detection unit 102, an object end-point estimation unit 103, an object bridging unit 104, a bridge-portion luminance value extraction unit 105, a same-object determination unit 106, an object region correction unit 107, and an output unit 108. Each functional unit may be implemented as a program operating on the arithmetic device 11, or may be implemented as a module having dedicated hardware.

The input unit 100 receives an image from which a target object is detected, which is input by the interface device 10. The feature amount extraction unit 101 calculates a feature amount for the image input to the input unit 100. The object region detection unit 102 calculates, based on the feature amount output by the feature amount extraction unit 101, a region of the target object in the image as a rectangle circumscribing the object. Further, the object region detection unit 102 calculates, based on the feature amount, an identification result of the object represented by each detected region, and a likelihood representing the certainty of the identification result.

The object end-point estimation unit 103 calculates coordinate values of two end points of each object for all of the object regions output by the object region detection unit 102. The object bridging unit 104 calculates, for a combination obtained by selecting two object regions out of the object regions output by the object region detection unit 102, a line connecting object end points of both the regions output by the object end-point estimation unit 103, as a set of coordinate values in the input image.

The bridge-portion luminance value extraction unit 105 extracts a luminance value on the line output by the object bridging unit 104, from the image input to the input unit 100. The same-object determination unit 106 determines, for the combination of the object regions bridged by the object bridging unit 104, through use of the luminance values on the line connecting the end points output by the bridge-portion luminance value extraction unit 105 as input, whether or not the object regions are object regions derived from the same object divided by occlusion.

The object region correction unit 107 corrects the target object region output by the object region detection unit 102 based on a determination result output by the same-object determination unit 106. The output unit 108 outputs a detection result of the target object region corrected by the object region correction unit 107 to the outside of the device.

### <Configuration and Operation of Each Unit>

Now, operations of the feature amount extraction unit 101, the object region detection unit 102, the object end-point estimation unit 103, the object bridging unit 104, the bridge-portion luminance value extraction unit 105, the same-object determination unit 106, the object region correction unit 107, and the output unit 108 in the function units are described in detail.

The feature amount extraction unit 101 calculates a feature amount for the image input to the input unit 100. Deep learning such as a convolutional neural network (CNN) is used to calculate the feature amount.

The object region detection unit 102 calculates, based on the feature amount output by the feature amount extraction unit 101, a region of the target object in the image, an identification result of the object represented by each detected region, and a likelihood representing the certainty of the identification result. Deep learning such as a CNN is used to calculate the object region, the identification result, and the likelihood.

In the learning, a large number of learning data sets including an input image and a correct object region and identification result are prepared. The image is input to the feature amount extraction unit 101, and the output from the object region detection unit 102 and the ground truth are compared so that parameters of the feature amount extraction unit 101 and the object region detection unit 102 are updated based on a result of the comparison. Even when a target to be detected is of one type, the fact that the detected object region represents the target object may be calculated as the identification result, and further the likelihood of being the target object may be calculated.

The object end-point estimation unit 103 calculates coordinate values of two end points of each object for all of the object regions output by the object region detection unit 102. Deep learning such as a CNN is used to estimate the above-mentioned end points. In the learning, a large number of learning data sets representing the detected object region and a correct coordinate value of the end point are prepared. The image of the object region is input to the object end-point estimation unit 103, and the output from the object end-point estimation unit 103 and the ground truth are compared so that the parameter of the object end-point estimation unit 103 is updated based on a result of the comparison. The end point may be calculated based on a condition set in advance. For example, an intersection between the longest line among straight lines passing through the center of gravity of the object and the contour of the object may be calculated as the end point.

The object bridging unit 104 calculates, for each combination of two selected object regions having the same identification result out of the object regions output by the object region detection unit 102, a line (trajectory) connecting the object end points of both the regions output by the object end-point estimation unit 103 as a set of coordinate values in the input image. The bridging line may be a broken line connecting close end points of both the objects with a straight line, or may be a curved line which complements a space between the end points of both the objects by a method such as spline interpolation in case that the target object has a curved shape.

The bridge-portion luminance value extraction unit 105 extracts, for each combination of two selected regions out of the object regions output by the object region detection unit 102, luminance values of coordinates on the line output by the object bridging unit 104 from the image input to the input unit 100. The extracted luminance values are converted into a one-dimensional vector (array of luminance values), and the one-dimensional vector is output to the same-object determination unit 106. As the luminance values to be extracted, pixel values of the above-mentioned input image may be directly extracted, or pixel values of an image obtained by subjecting the above-mentioned input image to smoothing processing to remove noise may be extracted. In a color image, a luminance of a pixel may be calculated by a predetermined expression from luminance values of R, G, and B.

The same-object determination unit 106 determines, for each combination of two selected regions out of the object regions output by the object region detection unit 102, through use of the luminance value on the bridging line output by the bridge-portion luminance value extraction unit 105 as input, whether or not the regions are the same object divided by an obstacle. This determination may be made by comparing the luminance value transition on the above-mentioned line to a pattern of luminance value transition set in advance, or by using machine learning such as a support vector machine (SVM) or deep learning such as a CNN. In the above-mentioned determination, a likelihood representing a certainty that both bridged object regions are derived from the same divided object is calculated. When the calculated likelihood is equal to or larger than a threshold value set in advance by the user, both object regions are determined to be derived from the same object.

For training of the model of the same-object determination unit 106, a large number of learning data sets representing the one-dimensional vector indicating the luminance value transition on the line and the ground truth of being the same object or different objects are prepared. For example, the likelihood of the ground truth may be 1 in the case of the same object, and 0 in the case of different objects. The one-dimensional vector indicating the luminance values on the line is input to the model, and the output likelihood and the ground truth are compared so that the parameter of the model is updated based on a result of the comparison. As described above, the same-object determination unit 106 may use the model to calculate the likelihood of being the same object, and make a determination by comparing the value of the likelihood to a threshold value set in advance.

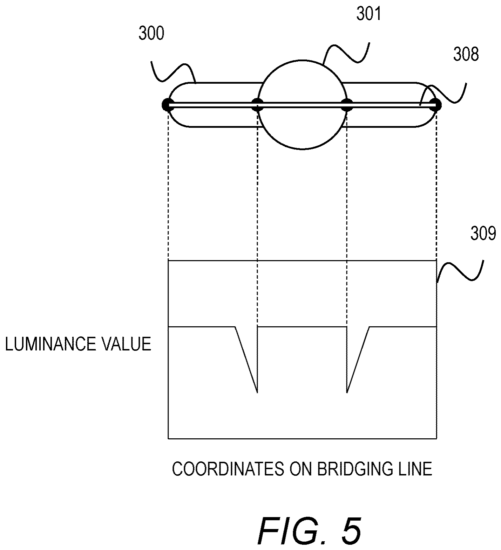

As described above, the same-object determination unit 106 may compare the luminance value transition on the line to a pattern of luminance value transition set in advance to determine whether or not the two object regions are the same object based on the degree of similarity. As described later with reference to FIG. 5, the luminance value transition of an obstacle and the same object divided by the obstacle may have a specific shape (pattern).

Specifically, when a shadow of the obstacle is formed on the target object behind, a valley-shaped luminance value reduced part as shown in FIG. 5 may appear on the luminance value transition. When an obstacle present in front casts a shadow on an object behind, on the luminance value transition, the luminance value sharply drops at a point coming from the front obstacle to a shadow region, and the shadow gradually fades and the luminance value increases along with separation from the front obstacle. Accordingly, when the above-mentioned luminance value reduction pattern is present in the luminance value transition, it can be determined that an object that corresponds to an obstacle is present in front.

One or a plurality of luminance value transition patterns indicating the same object divided by an obstacle may be prepared in advance, and, when the degree of similarity with any one of the patterns exceeds a threshold value, the two object regions may be determined as parts of the same object divided by an obstacle. As another example, one or a plurality of luminance value transition patterns indicating two different objects may be further prepared, and a state represented by a pattern having the largest degree of similarity may be determined as the current target state.

The object region correction unit 107 corrects, for each combination of two selected regions out of the object regions output by the object region detection unit 102, the object regions based on a determination result output by the same-object determination unit 106. When it is determined that the two bridged object regions are derived from the same object by the same-object determination unit 106, both the object regions are deleted, and a rectangle circumscribing both the object regions is created as a new object region. As the likelihood of the new object region, the likelihood of any one of the two object regions before correction calculated by the object region detection unit 102 may be adopted, or a new likelihood such as an average value of the likelihoods of both the object regions may be calculated and adopted.

The output unit 108 outputs, to the outside of the device, the target object region output by the object region detection unit 102 or the detection result of the target object region corrected by the object region correction unit 107, and the identification result and the likelihood of the detected object region. As the output format, coordinate values indicating the target object region, the identification result, and the likelihood thereof may be output as numerical data, or those pieces of data may be drawn as rectangles or letters on the input image and output as an image.

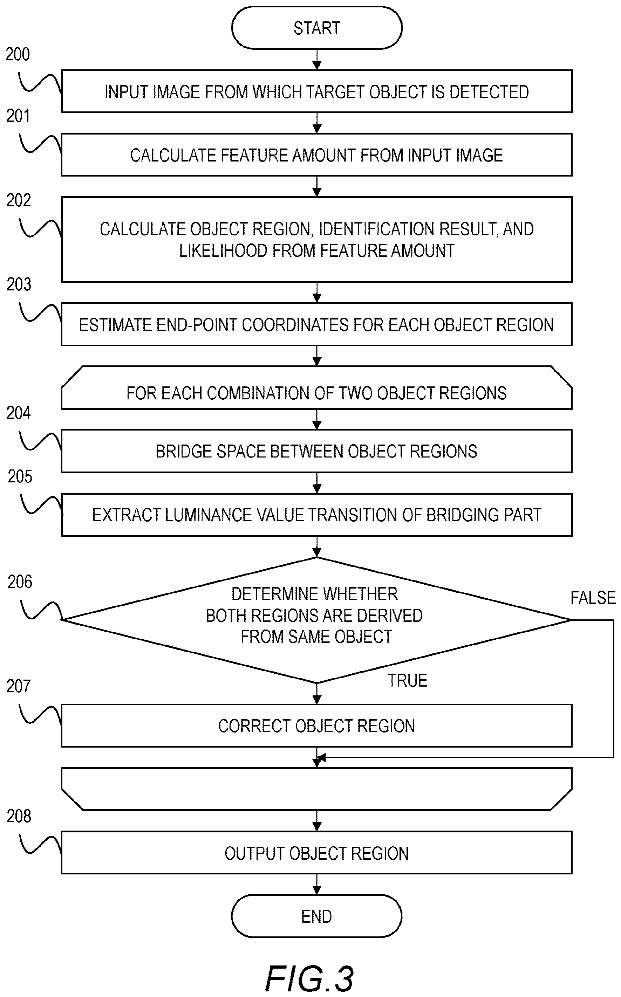

FIG. 3 is a flow chart for illustrating an example of a processing procedure of an image processing method according to the first embodiment. In the following, each functional unit of the image processing device 1 is described as a subject of operation, but the description may also be translated such that the arithmetic device 11 is the subject of operation, and the arithmetic device 11 executes each functional unit as a program.

The input unit 100 receives an image from which a target object is detected, and inputs the received image to the feature amount extraction unit 101 (Step 200).

The feature amount extraction unit 101 acquires information related to a feature extractor stored in the memory 12, and creates the feature extractor. Examples of the information related to the feature extractor include the structural formula of the network and the weight coefficient of each layer in the network. Moreover, the feature amount extraction unit 101 uses the feature extractor to calculate the feature amount of the input image (Step 201).

The object region detection unit 102 calculates, from the feature amount extracted by the feature amount extraction unit 101, the region of the target object in the above-mentioned input image, the object identification result of each region, and the likelihood representing the certainty of the identification result. The detected object region described above is output to the object end-point estimation unit 103 and the object region correction unit (Step 202).

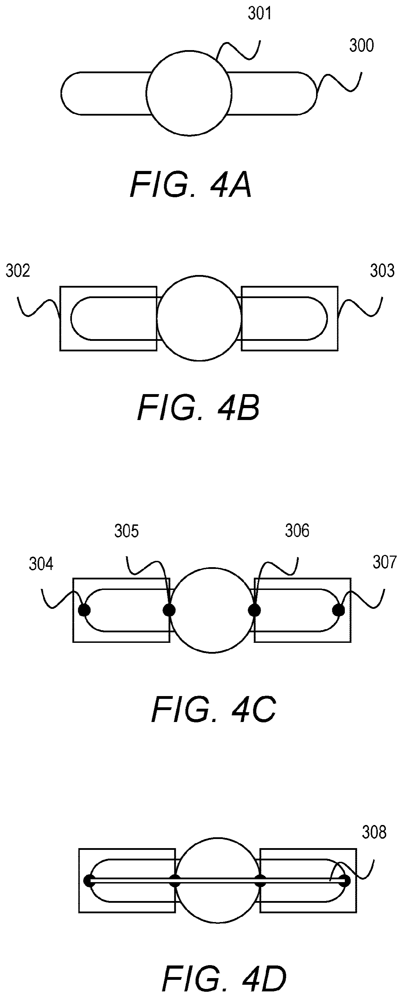

FIG. 4A is a view for illustrating an example of a state in which occlusion caused by an obstacle 301 divides an object 300 serving as a detection target, which may occur on the input image received in Step 200, and FIG. 4B is a view for illustrating an example of the object 300 that is detected as being separated into a region 302 and a region 303 by the above-mentioned division, which may be output in Step 202.

The object end-point estimation unit 103 calculates the coordinates of the two end points of the object in each object region detected by the object region detection unit 102 (Step 203).

FIG. 4C is a view for illustrating an example of end-point coordinate estimation results of the respective objects output in Step 203, for the object region 302 and the object region 303 in FIG. 4B. Two sets of end-point coordinates are estimated from each object region, and hence end-point coordinates 304 and end-point coordinates 305 are estimated from the object region 302, and end-point coordinates 306 and end-point coordinates 307 are estimated from the object region 303.

The object bridging unit 104 calculates, for a combination of two selected object regions out of the object regions detected by the object region detection unit 102, one line connecting a total of four end points calculated by the object end-point estimation unit 103 as a set of coordinate values in the input image (Step 204).

FIG. 4D is a view for illustrating an example of a line 308 which is output in Step 204 and connects the object end point 304 and the object end point 305 in the object region 302 and the object end point 306 and the object end point 307 in the object region 303. Here, when it is assumed that the object region 302 and the object region 303 are derived from the same object, the line 308 can be regarded as a trajectory passing through a center of the above-mentioned object. Through determination of presence or absence of occlusion on this trajectory, it is possible to determine whether the object region 302 and the object region 303 are the above-mentioned same object.

The bridge-portion luminance value extraction unit 105 extracts the luminance values on the line calculated by the object bridging unit 104 in the above-mentioned input image, and creates a one-dimensional vector (Step 205).

FIG. 5 is a diagram for illustrating an example of luminance value transition 309 on the line 308 in the input image, which may be extracted in Step 205. It can be estimated from the luminance value transition 309 that, for example, an obstacle having a high luminance value is present based on a protruding portion at the middle of the luminance value transition, and that a shadow of the above-mentioned obstacle is present, that is, the above-mentioned obstacle is in front of the object 300 in the input image based on each of recessed portions on both sides of the above-mentioned protruding portion having a sudden luminance value drop and a gentle luminance value rise from the center to each end portion.

Even if the obstacle present in front has a low luminance value, the estimation is allowed from presence of a recessed portion in which the luminance value gently rises from the middle to the end portion. Further, when a plurality of uneven shapes as described above are present, it can be estimated that a plurality of obstacles are also present in front. Further, even when recessed portions are present on both sides of a protruding portion, in a case in which the recessed portion is caused by a sudden luminance value drop and a sudden luminance value rise, it can be estimated that two separate objects are each casting a shadow on the background, and this state can be regarded not as the division of the same object.

The same-object determination unit 106 uses the vector calculated by the bridge-portion luminance value extraction unit 105 as input to determine whether the above-mentioned combination of object regions is derived from the same object divided by occlusion (Step 206).

The object region correction unit 107 integrates, for a combination of two selected object regions out of the object regions detected by the object region detection unit 102, when the same-object determination unit 106 determines that the above-mentioned combination of object regions is derived from the same object, both the object regions output by the object region detection unit 102 (Step 207).

Step 204, Step 205, Step 206, and Step 207 described above are repeated for all combinations of two selected object regions.

The output unit 108 outputs the object region which has been detected by the object region detection unit 102 and has been corrected by the object region correction unit 107 in accordance with the determination output by the same-object determination unit 106 (Step 208).

In the manner described above, it is possible to provide the image processing device and method with which a target object is detected from an image so that detection of an object divided by occlusion as a plurality of separated pieces is suppressed.

### Second Embodiment

A second embodiment of this invention provides an image processing device and a method therefor in which the number of times of repetition of the processing steps of Step 204, Step 205, Step 206, and Step 207 in the first embodiment is reduced so that the throughput is improved.

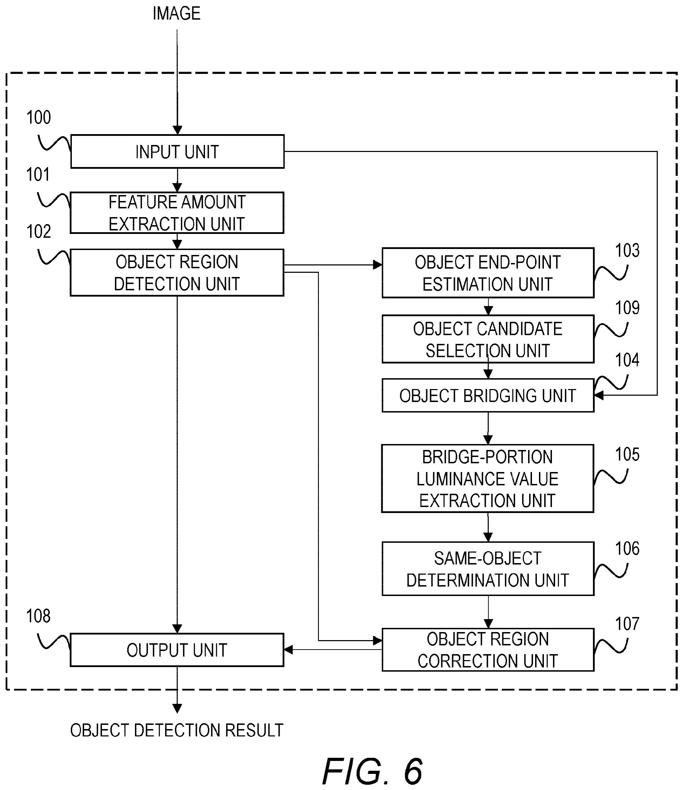

FIG. 6 is a block diagram for illustrating a functional configuration of the image processing device according to the second embodiment. The image processing device 1 according to the second embodiment includes a large number of components similar to those of the image processing device 1 according to the first embodiment (see FIG. 1), but includes an object candidate selection unit 109 as a new component. In the following, description of points that overlap the first embodiment is omitted, and different components are mainly described.

### <Configuration and Operation of Each Unit>

The operations of the input unit 100, the feature amount extraction unit 101, the object region detection unit 102, the object end-point estimation unit 103, and the output unit 108 are similar to those of the first embodiment. Accordingly, in the following, the object candidate selection unit 109, the object bridging unit 104, the bridge-portion luminance value extraction unit 105, the same-object determination unit 106, and the object region correction unit 107 are described.

The object candidate selection unit 109 selects one or a plurality of combinations of regions having a possibility of being divided by occlusion out of the object regions detected by the object region detection unit 102. Specifically, the object candidate selection unit 109 uses the object end-point coordinates in each region output by the object end-point estimation unit 103 to select the above-mentioned combination based on a positional relationship of those coordinates. As the positional relationship of the object end-point coordinates, for example, a distance between the closest end points of the two regions may be calculated and used, or close end points of both the regions may be connected by a straight line and an angle formed between adjacent straight lines may be calculated and used.

The object bridging unit 104 calculates, for a combination of object regions selected by the object candidate selection unit 109, a line connecting object end points of both regions output by the object end-point estimation unit 103 as a set of coordinate values in the input image. The other operations are similar to those in the first embodiment.

The bridge-portion luminance value extraction unit 105 extracts, for the combination of object regions selected by the object candidate selection unit 109, the luminance values of the coordinates on the line output by the object bridging unit 104 from the image input to the input unit 100. The other operations are similar to those in the first embodiment.

The same-object determination unit 106 determines, for the combination of object regions selected by the object candidate selection unit 109, through use of the luminance values on the bridging line output by the bridge-portion luminance value extraction unit 105 as input, whether or not the object regions are the same object divided by an obstacle. The other operations are similar to those in the first embodiment.

The object region correction unit 107 corrects, for the combination of object regions selected by the object candidate selection unit 109, the object region output by the object region detection unit 102 based on a determination result output by the same-object determination unit 106.

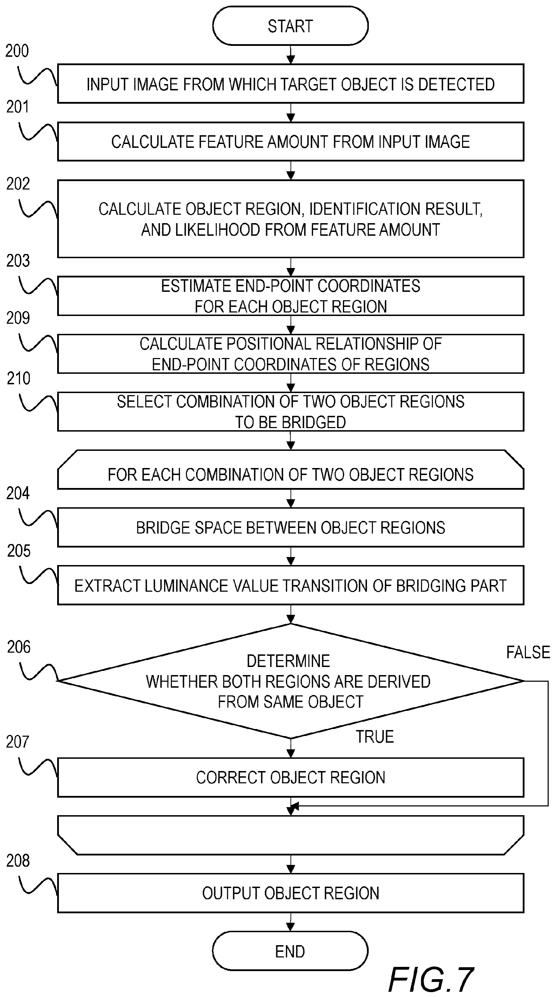

FIG. 7 is a flow chart for illustrating an example of a processing procedure of an image processing method according to the second embodiment. In the following, each functional unit of the image processing device 1 is described as a subject of operation, but the description may also be translated such that the arithmetic device 11 is the subject of operation, and the arithmetic device 11 executes each functional unit as a program. Further, the image processing method according to the second embodiment includes a large number of steps similar to those of the image processing method according to the first embodiment (see FIG. 3), but also includes Step 209 as a new step. In the following, description of a part of a processing procedure illustrated in FIG. 7 overlapping the first embodiment is omitted, and different steps are described.

The processing steps of Step 200, Step 201, Step 202, and Step 208 in the second embodiment are similar to those of the image processing method according to the first embodiment.

The object end-point estimation unit 103 calculates the coordinates of the two end points of the object in each object region detected by the object region detection unit 102, and outputs the coordinates to the object candidate selection unit 109 (Step 203).

The object candidate selection unit 109 calculates, for each pair of two selected regions out of the object regions detected by the object region detection unit 102, the positional relationship of the end-point coordinates of the respective objects calculated by the object end-point estimation unit 103. Examples of the above-mentioned positional relationship of the object end-point coordinates include a distance between the closest end-point coordinates between the above-mentioned two object regions, and an angle formed between adjacent straight lines when the close end points of both the regions are connected by a straight line (Step 209).

Further, the object candidate selection unit 109 selects a candidate for a combination of two object regions that may be derived from the same object, based on the above-mentioned positional relationship of the end-point coordinates. For example, when the closest end-point coordinates between the two object regions are separated from each other by more than a certain distance, it may be determined that the object regions cannot be derived from the same object because the object regions are separated from each other in terms of distance, or, when the above-mentioned straight lines intersect with each other at a certain angle or less, it may be determined that the object regions cannot be derived from the same object because an object serving as a target does not bend excessively (Step 210).

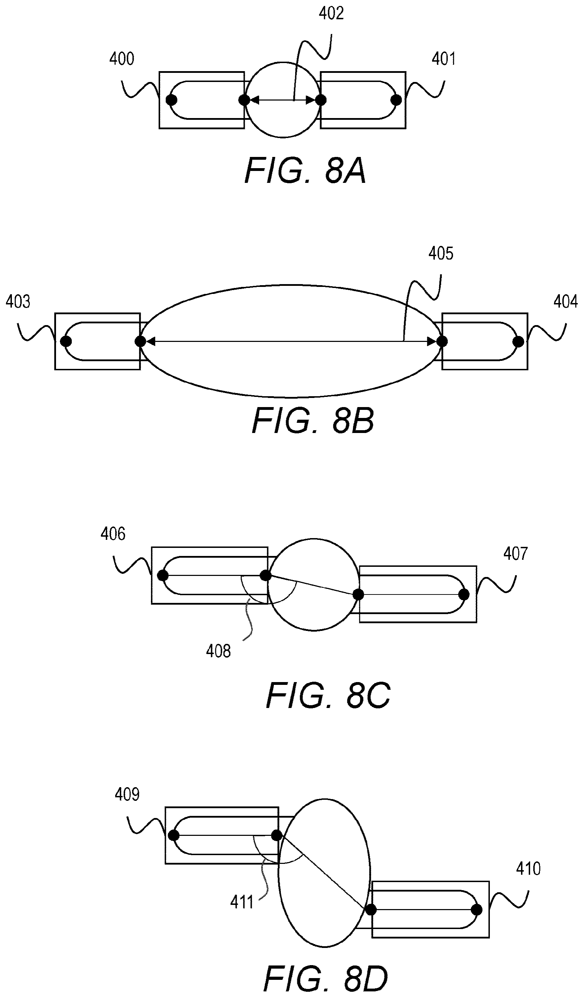

FIG. 8A to FIG. 8D are views for illustrating examples of the positional relationship of the object end-point coordinates calculated in Step 209. Further, FIG. 8A shows an example in which a distance 402 between the close end-point coordinates of both objects is short, and FIG. 8B shows an example in which a distance 405 as described above is long. For example, in Step 210, when a threshold value for a distance between object end points set in advance by the user in accordance with the target object is longer than the distance 402 and shorter than the distance 405, a combination of a region 400 and a region 401 is selected because this combination has a high possibility of being derived from the same object, and a combination of a region 403 and a region 404 is not selected because this combination has a low possibility of being derived from the same object. Thus, the combinations of object regions to be output to the subsequent steps are narrowed down.

Further, FIG. 8C shows an example in which an angle 408 formed between adjacent straight lines when close end points of both the objects are connected by a straight line is large, and FIG. 8D shows an example in which an angle 411 as described above is small. In Step 210, for example, when a threshold value for the angle formed between the straight lines connecting the object end points set in advance by the user in accordance with the target object is smaller than the angle 408 and larger than the angle 411, a combination of a region 406 and a region 407 is selected because this combination has a high possibility of being derived from the same object, and a combination of a region 409 and a region 410 is not selected because this combination has a low possibility of being derived from the same object. Thus, the combinations of object regions to be output to the subsequent steps are narrowed down.

The object bridging unit 104, the bridge-portion luminance value extraction unit 105, the same-object determination unit 106, and the object region correction unit 107 perform, for each combination of two object regions selected as having a possibility of being derived from the same object by the object candidate selection unit 109, similarly to the processing steps in the first embodiment, bridging between the objects (Step 204), acquisition of the luminance values of the bridged part (Step 205), determination on whether both the object regions are derived from the same object (Step 206), and correction of the object region (Step 207).

Step 204, Step 205, Step 206, and Step 207 described above are repeated for all of the combinations of two object regions output by the object candidate selection unit.

In the manner described above, it is possible to provide the image processing device and method with which the number of times of the bridging between the objects (Step 204), the extraction of the luminance values of the bridged part (Step 205), the determination on whether both the object regions are derived from the same object (Step 206), and the correction of the object region (Step 207) in the first embodiment is reduced, thereby improving the throughput.

### Third Embodiment

A third embodiment of this invention provides an image processing device and a method therefor for improving a determination accuracy of object regions derived from the same object in the first embodiment.

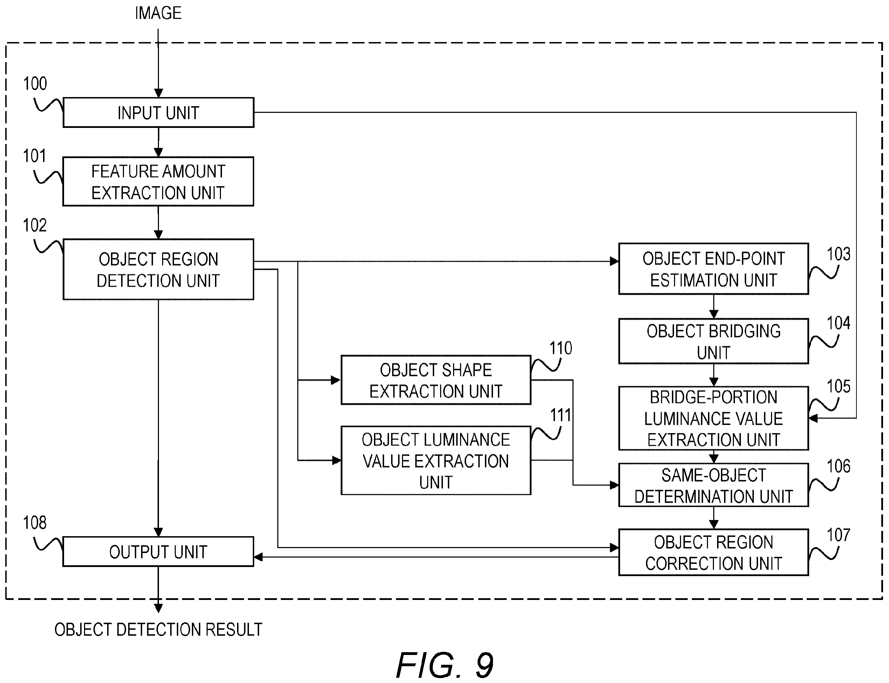

FIG. 9 is a block diagram for illustrating an example of a functional configuration of the image processing device according to the second embodiment of this invention. The image processing device 1 according to the third embodiment includes a large number of components similar to those of the image processing device 1 according to the first embodiment (see FIG. 1), but includes any one or both of an object shape extraction unit 110 and an object luminance value extraction unit 111 as new components. In the following, description of points that overlap the first embodiment is omitted, and different components are described.

### <Configuration and Operation of Each Unit>

The operations of the input unit 100, the feature amount extraction unit 101, the object region detection unit 102, the object end-point estimation unit 103, the object bridging unit 104, the bridge-portion luminance value extraction unit 105, the object region correction unit 107, and the output unit 108 are similar to those of the first embodiment. Accordingly, in the following, the object shape extraction unit 110, the object luminance value extraction unit 111, and the same-object determination unit 106 are described.

The object shape extraction unit 110 extracts a feature derived from a shape of an object in each object region detected by the object region detection unit 102. Specifically, examples of the feature derived from the shape of the object include an average and transition of object widths, and a degree of unevenness of the object contour. The degree of unevenness indicates a contour roughness, and may be expressed by, for example, a ratio between a length of the contour line and a contour average line. The above-mentioned shape feature may be calculated by extracting a detailed shape of the object through image processing, or may be calculated by estimating the above-mentioned feature derived from the object shape by deep learning or the like through use of an image of the object region as input.

The object luminance value extraction unit 111 extracts a feature derived from the luminance value of the object in each object region detected by the object region detection unit 102. Specifically, examples of the feature derived from the luminance value of the object include an average luminance value in each object region, and transition of the luminance value between object end points. The above-mentioned luminance value feature of the object may be calculated from the above-mentioned object region and the above-mentioned object end points, or may be calculated through use of a detailed object shape obtained by image processing, deep learning, or the like.

The same-object determination unit 106 determines, for the combination of object regions selected by the object candidate selection unit 109, whether or not the object regions are the same object divided by an obstacle. In the above-mentioned determination, presence or absence of occlusion between the object regions is determined based on the luminance values on the bridging line output by the bridge-portion luminance value extraction unit 105.

Further, from any one or both of the shape feature of the object output by the object shape extraction unit 110 and the luminance value feature of the object output by the object luminance value extraction unit 111, in consideration of the similarity and continuity of the features in both the objects, whether both the object regions are derived from the same object is determined. When the similarity of the features is higher than a threshold value or when the continuity of the features is higher than a threshold value, it is determined that the two object regions represent parts of the same object. The similarity can be calculated based on, for example, a difference or a cosine similarity. The continuity may be calculated from, for example, a difference in features at adjacent end points. In the manner described above, the same-object determination unit 106 determines that, even when occlusion caused by an obstacle is present to cover a space between separate objects, both the objects are separate objects based on the similarity and continuity of the features of both the objects.

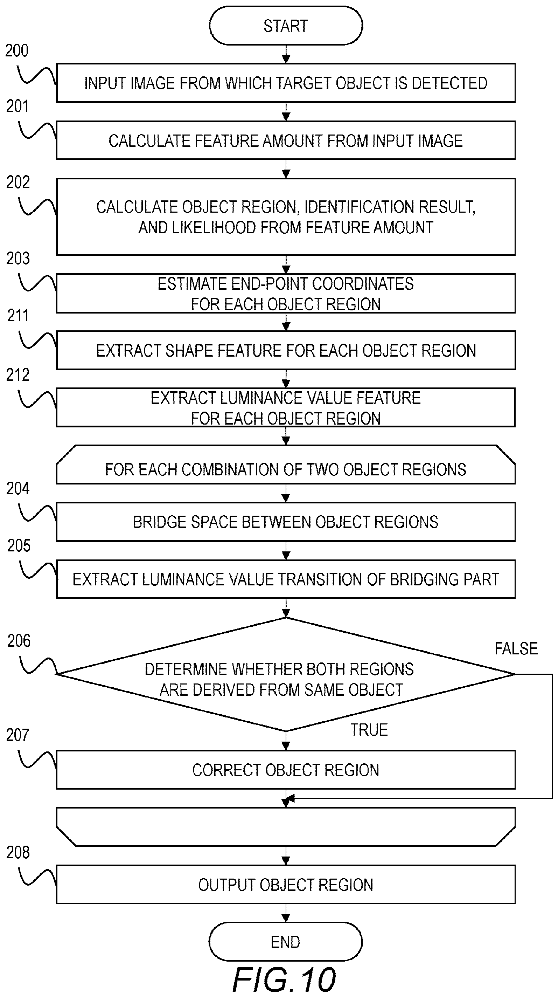

FIG. 10 is a flow chart for illustrating an example of a processing procedure of an image processing method according to the third embodiment. In the following, each functional unit of the image processing device 1 is described as a subject of operation, but the description may also be translated such that the arithmetic device 11 is the subject of operation, and the arithmetic device 11 executes each functional unit as a program. Further, the image processing method according to the third embodiment includes a large number of steps similar to those of the image processing method according to the first embodiment (see FIG. 3), but also includes any one of Step 210 and Step 211, or both thereof as new steps. In the following, description of a part of a processing procedure illustrated in FIG. 7 overlapping the first embodiment is omitted, and different steps are described.

The processing steps of Step 200, Step 201, Step 202, Step 203, Step 204, Step 205, Step 207, and Step 208 in the third embodiment are similar to those of the image processing method according to the first embodiment.

The object shape extraction unit 110 extracts, for each object region output by the object region detection unit 102, the above-mentioned feature amount derived from the shape of the object (Step 211).

The object luminance value extraction unit 111 extracts, for each object region output by the object region detection unit 102, the above-mentioned feature amount derived from the luminance value of the object (Step 212).

The same-object determination unit 106 determines, through use of the vector calculated by the bridge-portion luminance value extraction unit 105, the feature amount derived from the object shape output by the object shape extraction unit 110, and the feature amount derived from the luminance value of the object output by the object luminance value extraction unit 111 as input, whether the above-mentioned combination of object regions is derived from the same object divided by occlusion (Step 206).

In the manner described above, it is possible to provide the image processing device and the method with which the determination accuracy of object regions derived from the same object divided by occlusion in the first embodiment is improved.

### Fourth Embodiment

A fourth embodiment of this invention provides an image processing system which uses the image processing device as described in the first embodiment to detect a target object and correct an object region detected to be divided by occlusion.

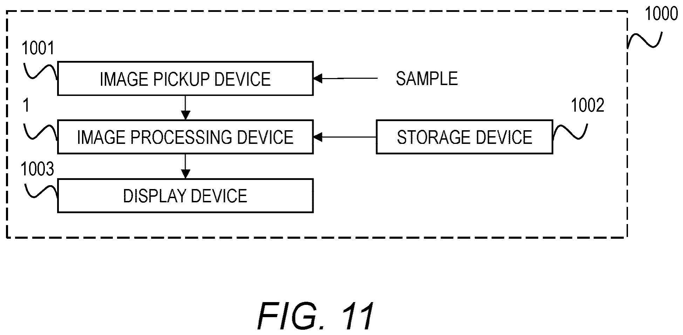

FIG. 11 is a diagram for illustrating a hardware configuration of the image processing system according to the fourth embodiment of this invention.

An image processing system 1000 includes an image pickup device 1001, the image processing device 1, a storage device 1002, and a display device 1003.

The image pickup device 1001 is a device for picking up an image from which a target object is detected, and is, for example, a camera, a microscope, or the like.

The image processing device 1 is the image processing device as described in the first embodiment, and calculates any one or more of a region of the target object, an identification result for each detected region, and a likelihood thereof, from the image picked up by the image pickup device 1001.

The storage device 1002 holds information related to object detection set in advance by the user. Specifically, examples of the information related to object detection include information about a detection target object, such as an object name, and a threshold value to be set for the likelihood output by the image processing device 1.

In the manner described above, it is possible to provide the image processing system with which a target object in an image can be detected as a single object, even in a case of an object divided by occlusion.

This invention is not limited to the embodiments described above. This invention includes various modification examples. For example, the embodiments described above are described in detail in order to facilitate an understanding of this invention, and this invention is not necessarily limited to one that includes all of the configurations described above. Further, some of the configurations of a given embodiment may be replaced with the configurations of another embodiment. In addition, the configurations of another embodiment may be added to the configurations of a given embodiment. Still further, other configurations may be added to, deleted from, or replace some of the configurations of each embodiment.

Further, each of the above-mentioned configurations, functions, processing units, and the like may be implemented by hardware by designing all or some of such configurations, functions, and processing units as integrated circuits, for example. In addition, each of the above-mentioned configurations, functions, and the like may also be implemented by software by interpreting and executing programs for implementing each function with a processor. Information such as programs, tables, and files for implementing each function may be stored in a memory, a recording device such as a hard disk drive and a solid state drive (SSD), or a recording medium such as an IC card and an SD card.

Further, only control lines and information lines considered to be required for description are illustrated. Not all of the control lines and information lines in a product are illustrated. In an actual product, it may be considered that almost all parts are coupled to each other.

## Claims

1. An image processing device for detecting a specific object in an image, the image processing device comprising:
an input unit configured to receive an input image;
a feature amount extraction unit configured to extract a feature amount from the input image;
an object region detection unit configured to detect an object region in the input image through use of the feature amount;
an object end-point estimation unit configured to estimate coordinates of an end point of an object in the object region;
an object bridging unit configured to calculate a trajectory which complements a space between end points in two object regions on the input image;
a same-object determination unit configured to determine, from luminance value transition on the trajectory, whether the two object regions are included in the same object;
an object region correction unit configured to correct the object region output by the object region detection unit based on a determination result output by the same-object determination unit; and
an output unit configured to output the corrected object region.

2. The image processing device according to claim 1, wherein the object bridging unit is configured to calculate a curved trajectory which bridges the two object regions by complementing the space between the end points in the two object regions by spline interpolation.

3. The image processing device according to claim 1, further comprising an object candidate selection unit configured to select, from object regions output by the object region detection unit, a combination of two object regions to be output to the object bridging unit based on a positional relationship of coordinates of the end points.

4. The image processing device according to claim 1, further comprising an object shape extraction unit configured to extract a feature amount of a shape of the object for each object region output by the object region detection unit,
wherein the extracted feature amount of the shape of the object is used as input of the same-object determination unit.

5. The image processing device according to claim 1, further comprising an object luminance value extraction unit configured to extract a feature amount of a luminance value of the object for each object region output by the object region detection unit,
wherein the extracted feature amount of the luminance value of the object is used as input of the same-object determination unit.

6. The image processing device according to claim 1,
wherein the same-object determination unit is configured to determine whether the two object regions are included in the same object through use of a model,
wherein input of the model includes luminance value transition on the trajectory,
wherein the model is configured to calculate a likelihood representing a certainty that the two object regions are included in the same object, and
wherein the model is already trained through use of a learning data set including a combination of the luminance value transition on the trajectory and the likelihood.

7. The image processing device according to claim 1,
wherein the object end-point estimation unit is configured to estimate the coordinates of the end point of the object in the object region through use of a model,
wherein input of the model includes an image of the detected object region,
wherein the model is configured to output coordinates of an end point of the input object region, and
wherein the model is already trained through use of a learning data set including a combination of the image of the object region and the coordinates of the end point of the object region.

8. An image processing method of detecting, by a device, a specific object in an image, the image processing method comprising:
detecting, by the device, an object region from an input image;
extracting, by the device, luminance value transition between two detected object regions;
determining, by the device, whether the two object regions are included in the same object from the luminance value transition; and
correcting, by the device, the object region in accordance with a result of the determining.

9. The image processing method according to claim 8, wherein the extracting of the luminance value transition includes:
obtaining coordinates of an end point of an object for each detected object region;
interpolating a space between end points to calculate a trajectory for each combination of the two object regions; and
extracting the luminance value transition on the trajectory from the input image.

10. The image processing method according to claim 9, wherein the extracting of the luminance value transition includes narrowing down combinations of two object regions for which the trajectory is calculated by a positional relationship of the end points of the two object regions.

11. The image processing method according to claim 8, further comprising extracting, for each detected object region, a feature amount of a shape of the object and/or a feature amount of a luminance value of the object,
wherein the determining of whether the two object regions are included in the same object uses, in addition to the luminance value transition, the feature amount of the shape and/or the feature amount of the luminance value.

12. An image processing system for detecting a specific object in an image, the image processing system comprising:
an image pickup device configured to pick up an image of a sample;
the image processing device of claim 1;
a storage device configured to hold information to be used in the image processing device; and
a display device configured to display an image processing result output by the image processing device.

13. The image processing system according to claim 12, wherein the image processing device is configured to acquire the information held by the storage device to create a model to be used in processing.

14. The image processing system according to claim 12,
wherein the image processing device is configured to transmit, when an image is input from the image pickup device, a detection result of a target object in the input image to the display device, and
wherein the display device is configured to output the detection result of the target object.
